# EUROPÄISCHE PATENTANMELDUNG

(11) **EP 1 263 247 A1**
(43) Veröffentlichungstag der Anmeldung: **04.12.2002**
(21) Anmeldenummer: 01440151.7
(22) Anmeldetag: 31.05.2001
(51) Int. Cl.: H04Q 7/30

(54) **Funkzugangsnetz zum Zugriff durch mehrere Mobilfunknetzwerkbetreiber**

(71) Anmelder: ALCATEL, 75008 Paris (FR)
(72) Erfinder: Dütting, Kasper, D-70180 Stuttgart (DE); Legat, Karl-Heinz, D-71272. Renningen (DE); Allerborn,Wihelm, D-71254 Ditzigen (DE)
(74) Vertreter: Rausch, Gabriele, Dr.

(57) **Zusammenfassung**

Mehrere Mobilfunk-Netzwerkbetreiber sollen Zugriff auf eine gemeinsame Infrastruktur haben, damit die Investitionen unter den Mobilnetzbetreibern geteilt werden können.

Dazu wird hier ein Funkzugangsnetz (UTRAN) vorgeschlagen zum Zugriff durch die Mobilfunknetzbetreiber, die jeweils ein Kernnetz (CN1, CN2, CN3) verwalten und betreiben. Das Funkzugangsnetz (UTRAN) hat mindestens eine Funkfeststation (NB) und damit verbundene Verteil- und Konzentratoreinrichtungen (CC, RNC1 bis RNC3), die die mindestens eine Funkfeststation (NB) mit den Mobilfunkvermittlungsstellen (MSC1 ...) der Kernnetze (CN1 ...) verbinden, wobei das Funkzugangsnetz (UTRAN) an mobile Teilnehmer (M1, MA), die in den Kernnetzen als Heimat-Teilnehmer (M1) oder als Besucher-Teilnehmer (MA) registriert sind, eines Satz (NIDS) von Netzkennungen aussendet, der erste Netzkennungen der Kernnetze (CN1..) für die Heimat-Teilnehmer (M1) und der zweite Netzkennungen von Fremdnetzen (MNA) für die Besucher-Teilnehmer (MA) enthält. Die Heimat-Teilnehmer (home subsriber) erhalten die Kennungen ihrer Heimat-Netze und die Besucher-Teilnehmer (roaming subscriber) die Kennungen ihrer Besucher-Netze. Anhand der empfangenen Netzkennungen können die bevorzugten Netze ausgewählt werden.

## Beschreibung

Mobilfunksysteme, die über ihre Funkzugangsnetze mobile Teilnehmer mit verschiedensten Mobilkommunikationsdiensten versorgen, sind seit langem bekannt. Eines der weltweit am weitesten verbreiteten Art ist das sogenannte GSM (Global System For Mobile Communications). Beim GSM handelt es sich um ein digitales zellulares Mobilfunksystem mit räumlich verteilten Funkfeststationen, die über Funkfeststationssteuerungen und Mobilfunkvermittlungsstellen an das öffentliche Telefonnetz angebunden sind. Das Funkzugangsnetz ist der Teil des Mobilfunksystems, der die Funkfeststationen und die Funkfeststationssteuerungen umfasst. Die Mobilfunkvermittlungsstelle gehört zu dem anderen Teil des Mobilfunksystems, nämlich zu dem sogenannten Kernnetz. Beide Netze eines Mobilfunksystems werden im allgemeinen von einem einzigen Mobilfunknetzbetreiber installiert, gewartet und betrieben. Das bedeutet, dass jeder Netzwerkbetreiber hohe Investitionen aufbringen muss, sowohl bei dem Aufbau des Mobilfunksystems als auch beim späteren Betrieb. Ein Mobilfunksystem, das von einem Netzwerkbetreiber betreiben wird und das sowohl ein Funkzugangsnetz und ein Kernnetz umfasst, wird auch kurz Netz genannt. Die Netze der verschiedenen Netzwerkbetreiber existieren dabei nebeneinander und versorgen nicht selten dieselben Bereiche, insbesondere in dichtbesiedelten Regionen. So gibt es beispielsweise in der Bundesrepublik Deutschland zwei Netzbetreiber, die jeweils ein GSM-Netz im 900 MHz-Bereich betreiben. Hinzu kommt noch ein dritter Netzbetreiber, der ein GSM-Netz im 1800 MHz-Bereich betreibt. Man spricht auch von Netzen der zweiten Generation.

Schon sehr bald sollen Netze der sogenannten dritten Generation aufgebaut und betrieben werden. Diese als UMTS (Universal Mobile Telecommunication System) bezeichneten Netze sollen die mobilen Teilnehmer mit verschiedensten Mobildiensten, insbesondere mit breitbandigen Datendiensten und Multimediadiensten, versorgen. Für einen Netzbetreiber, der ein neues Netz der dritten Generation aufbauen will, bedeutet dies sehr hohe Investitionen.

Die Erfindung geht nun von der Erkenntnis aus, dass mehrere Netzwerkbetreiber Zugriff haben sollen auf eine gemeinsame Infrastruktur, sodass die Investitionen zumindest für den Aufbau wie auch für den Betrieb eines gemeinsamen Funkzugangsnetzes unter den Mobilnetzbetreibern geteilt werden können.

Dazu wird hier ein Funkzugangsnetz mit den Merkmalen des Anspruchs 1 vorgeschlagen. Außerdem wird auch eine Funkfeststation dafür vorgeschlagen mit den Merkmalen des nebengeordneten Anspruchs.

Demnach wird ein Funkzugangsnetz vorgeschlagen zum Zugriff durch mehrere Mobilfunknetzbetreiber, die jeweils ein Kernnetz mit mindestens einer Mobilfunkvermittlungstelle verwalten und betreiben, wobei das Funkzugangsnetz mindestens eine Funkfeststation und damit verbundene Verteil- und Konzentratoreinrichtungen enthält, die die mindestens eine Funkfeststation des Funkzugangsnetzes mit den Mobilfunkvermittlungsstellen der Kernnetze verbinden, wobei das Funkzugangsnetz an mobile Teilnehmer, die in den Kernnetzen als Heimat-Teilnehmer oder als Besucher-Teilnehmer registriert sind, eines Satz von Netzkennungen aussendet, der erste Netzkennungen der Kernnetze für die Heimat-Teilnehmer und der zweite Netzkennungen von Fremdnetzen für die Besucher-Teilnehmer enthält.

Durch diese Maßnahmen wird erreicht, dass mobile Teilnehmer, die bei verschiedenen Netzbetreibern registriert sind, über ein gemeinsames Funkzugangsnetz versorgt werden, wobei die Heimat-Teilnehmer (home subsriber) die Netzkennung ihres Heimat-Netzes erhalten und die Besucher-Teilnehmer (roaming subscriber) die Netzkennungen ihrer Besucher-Netze. Das gemeinsame Funkzugangsnetz kann von den Betreibern der angeschlossenen Kernnetze genutzt werden, wobei jeder Betreiber sowohl seinen Heimat-Teilnehmern als auch seinen Besucher-Teilnehmer ohne Einschränkungen die gebuchten Dienste zu den registrierten Konditionen (Tarife) anbieten kann. Für die mobilen Teilnehmer selbst ist es möglich, anhand der empfangenen Netzkennungen, diejenigen auszuwählen, die er bevorzugt, sofern der Teilnehmer bei den entsprechenden Netzbetreibern als Heimat-Teilnehmer oder zumindest als Besucher-Teilnehmer dort registriert ist.

Besonders vorteilhafte Ausführungen der Erfindung ergeben sich aus den Unteransprüchen.

Es ist u.a. besonders vorteilhaft, wenn die zweiten Netzkennungen, die das Funkzugangsnetz für die Besucher-Teilnehmer aussendet, als virtuelle Netzkennungen ausgesendet werden, die für jedes der Kernnetze anzeigen, welche Fremdnetze für ihre Teilnehmer es zulassen, dass diese Teilnehmer dort als Besucher-Teilnehmer registrierbar sind. Mit anderen Worten: Es ist besonders vorteilhaft, wenn die zweiten Netzkennungen angeben, welche der Kernnetz-Betreiber mit welchen der Fremdnetz-Betreiber sogenannte Roaming-Abkommen abgeschlossen haben. Dadurch wird erreicht, dass der Teilnehmer eines Fremdnetzes bei Zugriff auf das Funkzugangsnetz anhand der zweiten Netzkennungen feststellen kann, über welche der Kernnetze er als Besucher-Teilnehmer Dienste anfordern kann. Sofern mehrere Roaming-Abkommen bestehen, kann ein solcher fremder Teilnehmer das Kernnetz (und damit auch den Betreiber) aus wählen, das (den) er bevorzugt.

Außerdem ist damit ausgeschlossen, dass die folgende Situation, so wie sie aus dem Stand der Technik bekannt ist, eintritt: Ein mobiler Teilnehmer, der in einem Fremdnetz registriert ist, befindet sich im Zugangsbereich von zwei oder mehr Gastnetzen, mit denen Roaming-Abkommen bestehen. Aufgrund von schon sich leicht ändernder Empfangsverhältnisse wird dieser Teilnehmer üblicherweise zwischen den Gastnetzen hin- und hergebucht (sogenanntes "ping-pong roaming"). Auch dieser nachteilige Effekt kann bei der Erfindung nicht auftreten.

Die Erfindung und die sich daraus ergebenden Vorteile werden nun näher beschrieben anhand von zwei Ausführungsbeispielen und unter Zuhilfenahme der folgenden Zeichnungen:
- Figur 1: zeigt schematisch den Anschluss von mehren Kernnetzen an ein gemeinsames Funkzugangsnetz (erstes Ausführungsbeispiel);
- Figur 2: zeigt das Aussenden von Netzkennungen durch diese Funkzugangsnetz; und
- Figur 3: zeigt schematisch den Anschluss von mehren Mobilfunkvermittlungsstellen an ein gemeinsames Funkzugangsnetz (zweites Ausführungsbeispiel).

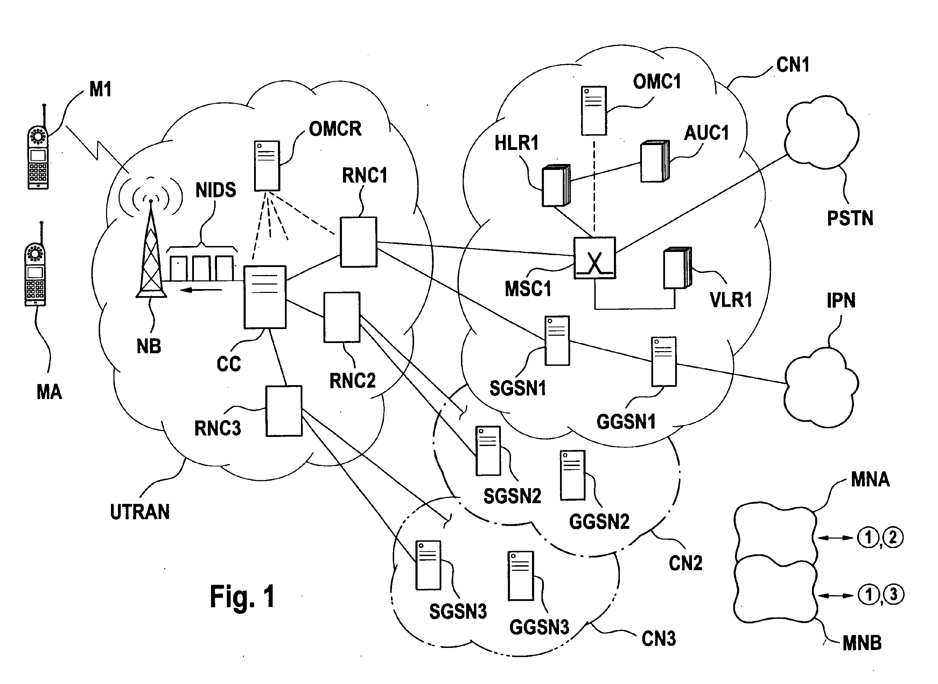

Die Figur 1 zeigt ein gemeinsames Funkzugangsnetz UTRAN, an das mehrere Kernnetze CN1, CN2 und CN3 angeschlossen sind. Diese Kernnetze wiederum sind mit einem öffentlichen Telekommunikationsnetz PSTN sowie mit einem paketorientierten Datennetz IPN verbunden. Außerdem sind noch zwei nicht direkt mit dem Funkzugangsnetz UTRAN verbundene Fremdnetze MNA und MNB in der Figur 1 dargestellt.

Jedes der Kernnetze, so auch das Kernnetz CN1, verfügt über eine Mobilfunkvermittlungsstelle GMSC1, eine daran angeschlossene Heimatdatei HLR1 sowie eine Besucherdatei VLR1. Weiterhin hat jedes Kernnetz, so auch CN1, eine Authentifizierungsdatei AUC1 und eine Betriebs- und Wartungszentrale OMC1. Die Mobilfunkvermittlungsstelle GMSC1 ist mit dem öffentlichen Telekommunikationsnetz PSTN verbunden und stellt leitungsvermittelte Verbindungen her zwischen dem PSTN und dem gemeinsamen Funkzugangsnetz UTRAN. Zur Übertragung von paketorientierten Daten hat jedes Kernnetz, so auch CN1, einen Router SGSN1, der mit dem Funkzugangsnetz UTRAN verbunden ist und einen Router mit Interworking-Funktion GGSN1, der mit dem paketorientierten Netz IPN verbunden ist. Diese ebenfalls miteinander verbundenen Router stellen paketorientierte Verbindungen zwischen dem IPN und dem Funkzugangsnetz UTRAN her.

Das erste Kernnetz CN1 wird von einem ersten Netzbetreiber verwaltet und betrieben. Die beiden anderen Kernnetze CN2 und CN3 enthalten die gleichen Elemente wie das Netz CN1 und sind ebenfalls mit dem gemeinsamen Funkzugangsnetz UTRAN verbunden. Jedoch wird das Netz CN2 von einem zweiten und das Netz CN3 von einem dritten Netzbetreiber verwaltet und betrieben. Die drei Netzbetreiber sollen nun unabhängig voneinander Zugriff auf das gemeinsame Funkzugangsnetz UTRAN erhalten.

Dazu verfügt das Funkzugangsnetz UTRAN über Verteil- und Konzentratoreinrichtungen CC und RNC1 bis RNC3, die das UTRAN mit den verschiedenen Kernnetzen CN1 bis CN3 verbindet. Zu diesen Einrichtungen gehören drei Funkkonzentratoren RNC1, RNC2 und RNC3, die jeweils mit einem der Kernnetze CN1, CN2 bzw. CN3 verbunden sind. Demnach wird beispielsweise für den ersten Netzbetreiber der Zugriff auf das Funkzugangsnetz UTRAN hergestellt über den ersten Funkkonzentrator RNC1. In dem Funkzugangsnetz UTRAN ist außerdem ein Cross-Collect CC vorhanden, der alle Funkkonzentratoren RNC1 bis RNC3 mit mindestens einer Funkfeststation NB verbindet. Über die Funkfeststation NB wiederum werden Funkverbindungen zu mobilen Teilnehmern M1 und MA hergestellt. Das Funkzugangsnetz UTRAN wird von einer Funkbetriebs- und Wartungszentrale OMCR verwaltet und überwacht. Diese Aufgabe wiederum obliegt nicht den Netzbetreibern, sondern einem von ihnen unabhängigen Hauptnetzbetreiber. Es wird somit dafür Sorge getragen, dass die Netzbetreiber der Kernnetze CN1 bis CN3 nur ihre eigenen Daten, Dienste und Netzressourcen verwalten können. Keiner der Netzbetreiber hat Zugriff auf sensitive Daten, auf Dienste oder auf Netzressourcen des anderen Netzbetreibers. Trotz der physikalischen Zusammenführung der Verbindungen in dem gemeinsamen Funkzugangsnetz UTRAN wird somit eine funktionelle Trennung zwischen den Netzbetreibern erreicht.

In dem UTRAN kann anstelle von mehreren Funkkonzentratoren RNC1 bis RNC3 auch ein einziger großer Funkkonzentrator verwendet werden, der über mehrere Anschlüsse (E1 ports) verfügt. Auch die Funktion des Cross-Connects CC kann durch eine andere Einrichtung, wie etwa einen DeMultiplexer (DEMUX) oder eine Vermittlungseinrichtung (switch) ausgeführt werden.

Das gemeinsame Funkzugangsnetz UTRAN soll nun für die mobilen Teilnehmer M1 und MA alle Dienste ihres jeweiligen Heimatnetzes bereitstellen, wobei der einzelnen mobile Teilnehmer nicht erkennt, dass er über ein gemeinsames Funkzugangsnetz UTRAN auf sein jeweiliges Heimatnetz zugreift. In dem in Fig. 1 dargestellten Beispiel erkennt der Teilnehmer M1 nicht, dass er über das gemeinsame UTRAN auf sein Heimatnetz CN1 zugreift. Vielmehr verhält sich gegenüber dem Teilnehmer M1 das Gesamtnetz so als sei es ein übliches Mobilfunk-Heimatnetz.

Erfindungsgemäß ist vorgesehen, dass von dem gemeinsamen Funkzugangsnetz UTRAN ausgehend ein Satz NIDS mit mehrerer Netzkennungen an die mobilen Teilnehmer ausgesendet werden, wobei diese Netzkennungen sowohl die Kennungen der Heimatnetze (Kernnetze CN1 bis CN3) umfassen als auch Kennungen für andere Netze, nämlich für Fremdnetze (MNA und MNB), deren Betreiber mit den Netzbetreibern der Kernnetze Roaming-Verträge abgeschlossen haben.

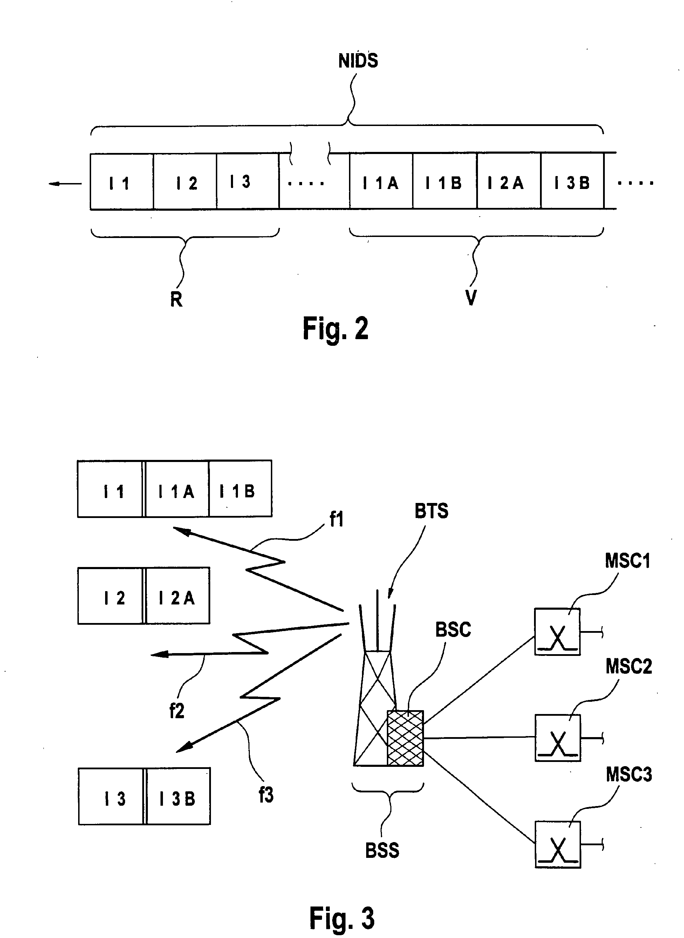

Es werden also zum sowohl Netzkennungen (I1 bis 13; siehe Fig. 2) für die verschiedenen Netzbetreiber ausgesendet als auch virtuelle Netzkennungen (I1A, I1B, I2A und I3B; siehe Fig. 2), die den Roaming-Partnern der Kernnetz-Netzbetreiber zugeordnet sind.

In dem gezeigten Beispiel hat der mobile Teilnehmer M1 einen Vertrag mit dem Netzbetreiber des ersten Netzes CN1 und wird dort in der Heimatdatei HLR1 registriert. Dieser mobile Teilnehmer M1 enthält von dem Funkzugangsnetz UTRAN die entsprechende Kennung l1 seines Netzbetreibers. Der andere in der Figur 1 dargestellte Teilnehmer MA ist jedoch nicht in einem der Kernnetze CN1 bis CN3 registriert, sondern in einem fremden Netz, nämlich in dem Fremdnetz MNA. Der Betreiber dieses Netzes MNA hat Roaming-Verträge abgeschlossen mit dem Betreiber des ersten Kernnetzes CN1 als auch mit dem Betreiber des zweiten Kernnetzes CN2. Erfindungsgemäß sendet nun das gemeinsame Funkzugangsnetz UTRAN auch Netzkennungen aus, die entsprechend diesen Roaming-Verträgen gekennzeichnet sind. Deshalb werden diese Netzkennungen werden hier auch als "virtuelle Netzkennungen" bezeichnet. Das bedeutet in diesem Beispiel, dass bezüglich des Fremdnetz-Teilnehmers MA sowohl eine erste virtuelle Netzkennung lA1 ausgesendet wird, die anzeigt, dass der Teilnehmer MA als Roaming-Teilnehmer über das erste Kernnetz CN1 Zugang haben kann, wie auch eine zweite virtuelle Netzkennung I2A, die anzeigt, dass der Teilnehmer MA auch über das zweite Kernnetz CN2 als Roaming-Teilnehmer Zugang haben kann. Dieses wird anhand der Figur 2 nun näher erläutert, wobei auch auf die Figur 1 Bezug genommen wird:
Die Figur 2 zeigt schematisch die von dem Funkzugangsnetzwerk UTRAN ausgesendeten Satz NIDS von Netzkennungen. Diese werden beispielsweise auf einem einzigen Träger, dem Piloten, sequenziell übertragen, wobei in einem ersten Teil R die echten Funknetzkennungen 11, 12 und 13 für die Kernnetze CN1, CN2 bzw. CN3 ausgesendet werden. Diejenigen mobilen Teilnehmer, die in mehr als einem Kernnetz als Heimat-Teilnehmer registriert sein können, haben nun die Möglichkeit zwischen ihren Heimatnetzen zu wechseln und das bevorzugte Heimatnetz auszuwählen. Solche Teilnehmer verfügen z.B. über ein Teilnehmerendgerät (Mobiltelefon), das mehrere SIM-Karten (subsriber identity cards) enthält oder eine Multinetwork-SIM-Karte enthält.

Außerdem werden in einem zweiten Teil V virtuelle Netzkennungen I1A, I1B, 12A, I3B ausgesendet, die die Roaming-Verhältnisse wiedergeben. So zeigt die virtuelle Netzkennung I1A an, dass ein im Fremdnetz MNA registrierter mobiler Teilnehmer (z.B. der Teilnehmer MA) über das erste Kernnetz CN1 Zugang haben kann. Die andere virtuelle Netzkennung 11 B zeigt an, dass ein Teilnehmer des Fremdnetzes MNB ebenfalls über das erste Kernnetz CN1 Zugang haben kann. Die virtuelle Netzkennung I2A zeigt an, dass Teilnehmer des Fremdnetzes MNA auch über das zweite Kernnetz CN2 Zugang haben können und schließlich zeigt die virtuelle Netzkennung I3B an, dass Teilnehmer des Fremdnetzes MNB auch Zugang über das dritte Kernnetz CN3 haben können. Mit anderen Worten bedeutet dies: Für jedes bestehenden Roaming-Abkommen gibt es eine eigene Kennung. Die Teilnehmergeräte, die diese virtuellen Kennungen empfangen können also in dem gezeigten Beispiel erkennen, dass der Betreiber des Fremdnetzes MNA Roaming-Verträge mit den Betreibern der CN1 und CN2 hat. Außerdem können sie erkennen, dass der Betreiber des Fremdnetzes MNB hat Roaming- Verträge mit den Betreibern CN1 und CN3 hat. Die virtuellen Netzkennungen geben also die tatsächlich existierenden Roaming-Verhältnisse wieder.

Dadurch, dass nicht nur die echten Netzkennungen der Kernnetze (im ersten Teil R) übertragen werden, sondern dass auch virtuelle Netzkennungen (im zweiten Teil V) von dem UTRAN erzeugt und übertragen werden, ergibt sich noch der folgende Vorteil. Nun haben auch diejenigen Besucher-Teilnehmer, deren Betreiber mit mehr als einem Kernnetz-Betreiber ein Roaming-Abkommen abgeschlossen haben, die Möglichkeit der Netzauswahl. Diese Besucher-Teilnehmer können anhand der virtuellen Netzkennungen die Roaming-Partner erkennen und zwischen ihnen wechseln sowie den bevorzugten auswählen.
Die Figur 3 zeigt als zweites Beispiel ein Funkzugangsnetz BSS, dass auf mehreren Funkträgern f1, f2 und f3 die Netzkennungen aussendet. Das Funkzugangsnetz BSS enthält Funkfeststationen BTS und damit verbundene Verteil- und Konzentratoreinrichtungen in Form von Funkfeststationssteuerungen BSC. Von diesen Elementen ist beispielhaft jeweils nur eines in der Figur 3dargestzellt.

Das Funkzugangsnetz BSS ist über die Funkfeststationssteuerung BSC mit mehreren Mobilvermittlungsstellen MSC1, MSC2 und MSC3 verbunden. Diese Mobilevermittlungsstellen gehören jeweils zu einem Kernnetz von verschiedenen Netzbetreibern. Diese Darstellung entspricht im wesentlichen der Darstellung nach Figur 1, auf die hier auf Bezug genommen wird.

Auf der Funkseite zu den mobilen Teilnehmern hin sendet nun das Funkzugangsnetz BSS auf den verschiedenen Funkträgern f1 bis f3 die Kennungen aus, wobei jeweils ein Funkträger einem der Kernnetzbetreiber zugeordnet ist. Beispielsweise hat der Betreiber des ersten Kernnetzes CN1 die Funkträgerfrequenz f1 zugewiesen bekommen. Der Betreiber des zweiten Kernnetzes hat die Funkträgerfrequenz f2 und der Betreiber des dritten Kernnetzes CN3 hat die Funkträgerfrequenz f3 zugewiesen bekommen.

Auf der ersten Funkträgerfrequenz f1 werden sowohl die echte Netzkennung des Netzbetreibers selbst, das heißt die Kennung l1, ausgesendet als auch die virtuellen Netzkennungen I1A und I1B, die den Roaming-Partnern dieses Netzbetreibers zugewiesen sind. Auf der zweiten Funkträgerfrequenz f2 wird die erste Netzkennung I1 und die virtuelle Netzkennung I2A ausgesendet. Schließlich wird auf der dritten Funkträgerfrequenz f3 die echte Kennung 13 und die virtuelle Kennung I3B ausgesendet.

Im Vergleich zu dem Beispiel nach Figur2 ist in dem Beispiel nach Figur 3 bereits aufgrund der verschiedenen Funkträger f1 bis f3 eine Trennung zwischen den Netzbetreibern durchgeführt. Das hat den Vorteil, dass die Teilnehmer nicht alle Netzkennungen detektieren müssen, sondern lediglich diejenigen Funkfrequenzträger überwachen müssen, auf denen die ihnen zugeordneten Netzkennungen übertragen werden. Beispielsweise brauchen die Heimat-Teilnehmer des ersten Kernnetzes CN1 lediglich auf der Funkträgerfrequenz f1 eine Detektion durchführen. Auch die Besucher-Teilnehmer, deren Netzbetreiber lediglich Roaming-Abkommen mit dem ersten Kernnetzbetreiber haben, müssen nur diese eine Funkträgerfrequenz f1 überwachen. Insgesamt wird damit die Zeitspanne für vom Teilnehmerendgerät durchgeführte Netzsuche (PLMN search) beim Zugriff auf das Funkzugangsnetz BSS verkürzt.

Die beschriebenen Beispiele bedeuten keine Einschränkung der Erfindung auf andere Varianten. Es ist auch denkbar, das die echten Netzkennungen und die virtuellen Netzkennungen nicht blockweise voneinander getrennt, sondern in einer beliebigen Anordnung zueinander, übertragen werden. Auch kann an Stelle einer sequentiellen Übertragung oder einer auf mehreren Funkträgern parallelen Übertragung eine Simultanübertragung aller Netzkennungen erfolgen, indem die Netzkennungen durch spezielle Kodierungen voneinander getrennt werden. Die virtuellen Netzkennungen können zudem auch so gestaltet werden, dass sie etwa die von den Teilnehmern gebuchten Dienste angeben (z.B. Guthabendienst, sog. prepaid service) oder dass sie verschiedenen Diensteanbietern zugeordnet werden, die nicht selbst Betreiber sind, sondern nur als virtuelle Netzbetreiber auftreten.

Ein Fallbeispiel soll dieses verdeutlichen:
Das gezeigte Funkzugangsnetz UTRAN würde beispielsweise einen Bereich innerhalb der Bundesrepublik Deutschland abdecken, wobei drei verschiedene Netzbetreiber auftreten. Der Betreiber des ersten Kernnetzes CN1 sei beispielsweise der Betreiber "Michel 1". Die Betreiber der anderen Kernnetze CN2 und CN3 heißen beispielsweise "Michel 2" und "Michel 3". Die dargestellten Fremdnetze MNA und MNB seien beispielsweise von französischen Betreibern in Frankreich betriebene Netze. Das Netz MNA werde von dem Betreiber "Marianne A " betrieben. Das Netz MNB werde von einem Diensteanbieter "Marianne B" betrieben, der als virtueller Betreiber auftritt. Das MNB sei dabei ein Teil von einem französischem Netz (MNX), das der Betreiber "Marianne X" verwaltet und betreibt.

Der Teilnehmer M1 habe nun einen Vertrag mit dem Betreiber "Michel 1". Er empfängt also unter anderem die Kennung l1 und kann sich über das gemeinsame Funkzugangsnetz UTRAN in sein Heimat-Netz CN1 einbuchen. Falls dieser Teilnehmer auch einen prepaid service mit dem Betreiber "Michel 3" haben sollte, kann er alternativ auch über eine virtuelle Kennung sich in dem dritten Kernnetz CN3 als prepaid-Kunde einbuchen. Der Teilnehmer MA habe einen Vertrag mit dem französischen Betreiber "Marianne A". Er ist zu Gast in dem Funkzugangsnetz UTRAN und kann sich nun bei einem der Roaming-Partnernetze von "Marianne A" einbuchen, beispielsweise in dem Kernnetz CN1 oder in dem Kernnetz CN2. Dort würde er dann jeweils als Besucher -Teilnehmer geführt. Der Teilnehmer möge vielleicht auch als prepaid-Kunde bei dem französischen Diensteanbieter "Marianne B" registriert sein. Dann es ist gegebenenfalls über eine virtuelle Netzkennung möglich , dass er sich über einen entsprechenden Roaming-Partner, beispielsweise über den Betreiber des Netzes CN3, einbucht und als prepaid-Kunde für den Diensteanbieter "Marianne B" geführt wird.

Die virtuellen Netzkennungen könnten auch so gestaltet werden, dass jedem Teilnehmer, unabhängig davon ob er ein Besucher (roamer) ist oder nicht, der Aufenthalt in seinem Heimat-Netzkennung simuliert wird. Das bedeutet z.B., dass auf der Anzeige (display) des Mobiltelefons des Teilnehmers MA, der sich im Funkzugangsnetz UTRAN befindet, das Logo seines Heimatnetz-Betreibers "Marianne B" erscheint.

Die Erfindung kann auch so ausgeführt sein, dass nur ein gemeinsames Kernnetz besteht, auf dass die mehreren Betreiber zugreifen. In diesem Fall hat die Mobilfunkvermittlungsstelle des gemeinsamen Kernnetzes die Funktion, dass sie gegenüber der Heimatdatei (HLR) die verschiedenen - Heimatnetz-Kennungen (Home PLMNs) simuliert. Das ganze Netz wäre dann ein "Multi-Provider-Network", also ein Gesamtnetz für mehrere Betreiber. Die Teilnehmer würde davon nichts bemerken, sondern meine sie befänden sich in ihrem jeweiligen Heimatnetz. Um diese Funktion auch bei Besucher-Teilnehmern (roamern) zu realisieren, wäre es vorteilhaft, die Mobilfunkvermittlungsstelle mit einem Dienstesteuerungspunkt (SCP) zu verbinden, der im Rahmen eines Intelligenten Netzes (IN) die Kennungen der Fremdnetze (Roamer PLMNs) verwaltet.

## Patentansprüche

1. Funkzugangsnetz (UTRAN; BSS) zum Zugriff durch mehrere Mobilfunknetzbetreiber, die jeweils ein Kernnetz (CN1) mit mindestens einer Mobilfunkvermittlungstelle (MSC1, MSC2, MSC3) verwalten und betreiben, wobei das Funkzugangsnetz (UTRAN; BSS) mindestens eine Funkfeststation (NB; BTS) und damit verbundene Verteil- und Konzentratoreinrichtungen (CC, RNC1, RNC2, RNC3; BSC) enthält, die die mindestens eine Funkfeststation (NB; BTS) des Funkzugangsnetzes (UTRAN; BSS) mit den Mobilfunkvermittlungsstellen (MSC1, MSC2, MSC3) der Kernnetze (CN1, CN2, CN3) verbinden, wobei das Funkzugangsnetz (UTRAN; BSS) an mobile Teilnehmer (M1, MA), die in den Kernnetzen (CN1, CN2, CN3) als Heimat-Teilnehmer (M1) oder als Besucher-Teilnehmer (MA) registriert sind, eines Satz von Netzkennungen (NDIS) aussendet, der erste Netzkennungen (I1, l2, l3) der Kernnetze (CN1, CN2, CN3) für die Heimat-Teilnehmer (M1) und der zweite Netzkennungen (I1A, I1B, I2A, I3B) von Fremdnetzen (MNA, MNB) für die Besucher-Teilnehmer (MA) enthält.

2. Funkzugangsnetz (UTRAN) nach Anspruch 1, das auf einem Funkträger die Netzkennungen (I1, I2, I3, I1A, I1B, I2A, I3A) sequentiell aussendet, indem das Funkzugangsnetz (UTRAN) die ersten Netzkennungen (I1, I2, I3) in einem ersten Block (R) und die zweiten Netzkennungen (I1A, I1B, I2A, I3A) in einem zweiten Block (V) aussendet.

3. Funkzugangsnetz (UTRAN) nach Anspruch 1, das die zweiten Netzkennungen (I1A, I1 B, I2A, I3A) als virtuelle Netzkennungen aussendet, die für jedes der Kernnetze (CN1, CN2, CN3) anzeigen, welche Fremdnetze (MNA, MNB) für ihre Teilnehmer (MA) es zulassen, dass diese Teilnehmer (MA) als Besucher-Teilnehmer in dem jeweiligen Kernnetz (CN1, CN2) registrierbar sind.

4. Funkzugangsnetz (UTRAN) nach Anspruch 1, bei dem die Verteil- und Konzentratoreinrichtungen einen Cross-Connect (CC) und mehrere Funkkonzentratoren (RNC1, RNC2, RNC3) umfassen, die über die Mobilfunkvermittlungstellen (MSC1; MSC2, MSC3) jeweils mit einem der Kernnetze (CN1, CN2, CN3) verbunden ist.

5. Funkzugangsnetz (UTRAN) nach Anspruch 4, bei dem zumindest eines der Kernnetze (CN1) einen ersten Router (SGSN1) und einen zweiten Router (GGSN1) mit Interworking-Function zum Anschluss an ein paketorientiertes Netz (IPN) umfasst, und bei der mit diesem Kernnetz (CN1) verbundene Funkkonzentrator (RNC1) eine Schnittstelle zu dem ersten Router (SGSN1) enthält.

6. Funkzugangsnetz (BSS) nach Anspruch 1, das auf mehreren Funkträgern (f1, f2, f3) die Netzkennungen (I1, l2, l3, I1A, l1 B, I2A, I3A) parallel aussendet, wobei das Funkzugangsnetz (BSS) den Netzbetreibern der Kernnetze (CN1, CN2, CN3) verschiedene Funkträger (f1, f2, f3) zuweist und auf dem jeweiligen Funkträger (f2) nur diejenigen Netzkennungen (I2, I2A) aussendet, die das entsprechende Kernnetz (CN2) und diejenigen Fremdnetze (MNA) anzeigen, deren Teilnehmer (MA) als Besucher-Teilnehmer in diesem Kernnetz (CN2) registrierbar sind.

7. Funkfeststation (NB; BTS) für ein Funkzugangsnetz (UTRAN; BSS) zum Zugriff durch mehrere Mobilfunknetzbetreiber, die jeweils ein Kernnetz (CN1) mit mindestens einer Mobilfunkvermittlungstelle (MSC1, MSC2, MSC3) verwalten und betreiben, wobei das Funkzugangsnetz (UTRAN; BSS) mindestens diese Funkfeststation (NB; BTS) und damit verbundene Verteil- und Konzentratoreinrichtungen (CC, RNC1, RNC2, RNC3; BSC) enthält, die die mindestens eine Funkfeststation (NB; BTS) des Funkzugangsnetzes (UTRAN; BSS) mit den Mobilfunkvermittlungsstellen (MSC1, MSC2, MSC3) der Kernnetze (CN1, CN2, CN3) verbinden, wobei die Funkfeststation (NB; BTS) an mobile Teilnehmer (M1, MA), die in den Kernnetzen (CN1, CN2, CN3) als Heimat-Teilnehmer (M1) oder als Besucher-Teilnehmer (MA) registriert sind, eines Satz von Netzkennungen (NDIS) aussendet, der erste Netzkennungen (I1, l2, l3) der Kernnetze (CN1, CN2, CN3) für die Heimat-Teilnehmer (M1) und der zweite Netzkennungen (I1A, l1 B, I2A, I3B) von Fremdnetzen (MNA, MNB) für die Besucher-Teilnehmer (MA) enthält.

8. Funkfeststation (NB) nach Anspruch 7, die auf einem Funkträger die Netzkennungen (I1, I2, I3, I1A, I1B, I2A, I3A) sequentiell aussendet, indem die Funkfeststation (NB) die ersten Netzkennungen (I1, l2, l3) in einem ersten Block (R) und die zweiten Netzkennungen (I1A, lB, I2A, I3A) in einem zweiten Block (V) aussendet.

9. Funkfeststation (NB) nach Anspruch 7, das die zweiten Netzkennungen (I1A, l1 B, I2A, I3A) als virtuelle Netzkennungen aussendet, die für jedes der Kernnetze (CN1, CN2, CN3) anzeigen, welche Fremdnetze (MNA, MNB) für ihre Teilnehmer (MA) es zulassen, dass diese Teilnehmer (MA) als Besucher-Teilnehmer in dem jeweiligen Kernnetz (CN1, CN2) registrierbar sind.

10. Funkfeststation (BTS) nach Anspruch 7, das auf mehreren Funkträgern (f1, f2, f3) die Netzkennungen (I1, l2, l3, I1A, I1B, I2A, l3A) parallel aussendet, wobei das Funkzugangsnetz (BSS) den Netzbetreibern der Kernnetze (CN1, CN2, CN3) verschiedene Funkträger (f1, f2, f3) zuweist und wobei die Funkfeststation (BTS) auf dem jeweiligen Funkträger (f2) nur diejenigen Netzkennungen (I2, I2A) aussendet, die das entsprechende Kernnetz (CN2) und diejenigen Fremdnetze (MNA) anzeigen, deren Teilnehmer (MA) als Besucher-Teilnehmer in diesem Kernnetz (CN2) registrierbar sind.
